# EUROPEAN PATENT APPLICATION

(11) **EP 4 841 077 A1**
(43) Date of publication of application: **18.11.2026**
(21) Application number: 24927068.7
(22) Date of filing: 19.11.2024
(51) Int. Cl.: F01K 23/10, F01D 21/00, F01K 9/00, F02C 6/00, F02C 6/18

(54) **PLANT AND PLANT CONTROL METHOD**

(30) Priority: 26.02.2024 JP 2024026509
(71) Applicant: Mitsubishi Heavy Industries, Ltd., Chiyoda-ku Tokyo 100-8332 (JP)
(72) Inventor: TSUJIKAWA, Hiroshi, Tokyo 100-8332 (JP); HIURA, Daisuke, Tokyo 100-8332 (JP)
(74) Representative: Hoffmann Eitle
(86) International application number: PCT/JP2024/040933
(87) International publication number: WO 2025/182185

(57) **Abstract**

A plant includes: a gas turbine; a heat recovery steam generator; a steam turbine; a carbon dioxide recovery unit that recovers, by using an absorption liquid, carbon dioxide contained in the exhaust gas discharged from the heat recovery steam generator; a steam supply system that supplies the steam generated in the heat recovery steam generator to the steam turbine and the carbon dioxide recovery unit; a condenser that generates water from the steam discharged from the steam turbine; a condensate system that is provided downstream of the condenser and that supplies the water generated in the condenser to the heat recovery steam generator; and a first return system that supplies water generated by heat exchange between the absorption liquid and the steam in the carbon dioxide recovery unit to the condenser or a condensate tank that receives and stores the water from the condenser.

## Description

### Technical Field

The present disclosure relates to a plant and a plant control method.

### Background Art

As a high-efficiency power generation facility using fossil fuel, there is a gas turbine combined cycle power plant (Gas Turbine Combined Cycle: hereinafter, also referred to as "GTCC"). In the GTCC, in addition to power generation in a gas turbine, the exhaust heat is used for steam generation in a heat recovery steam generator (hereinafter, also referred to as "HRSG"), and power generation is also performed in a steam turbine using the steam, thereby realizing high power generation efficiency.

In a power generation plant including the GTCC as described above, a carbon dioxide recovery unit (Carbon Capture Plant: hereinafter, also referred to as "CCP") that recovers carbon dioxide in a combustion exhaust gas from a gas turbine to reduce the emission amount of carbon dioxide may be installed (for example, see PTL 1). The CCP includes a carbon dioxide absorption tower that absorbs carbon dioxide in an exhaust gas with an absorption liquid (for example, an amine absorption liquid or the like), and an absorption liquid regeneration column that desorbs carbon dioxide from the absorption liquid that has absorbed the carbon dioxide. The absorption liquid regeneration column of the CCP includes a reboiler that heats the absorption liquid with steam in order to desorb carbon dioxide from the absorption liquid.

In the absorption liquid regeneration column, the absorption liquid that has absorbed carbon dioxide in the reboiler is heated with steam, so that carbon dioxide is desorbed and released from the absorption liquid, high-purity carbon dioxide is recovered, the absorption liquid is regenerated, and the absorption liquid is sent to the carbon dioxide absorption tower to be circulated and reused. The steam supplied to the reboiler is converted into condensed water by the heating process.

### Citation List

### Patent Literature

[PTL 1] Japanese Unexamined Patent Application Publication No. 2021-181786

### Summary of Invention

### Technical Problem

In a power generation plant including the GTCC and the CCP as described above, a configuration in which a part of the steam generated in the heat recovery steam generator of the GTCC is supplied to the reboiler of the CCP is being studied. In this configuration, an issue is how to treat the condensed water generated by the heat exchange between the absorption liquid and the steam in the reboiler, and a configuration in which water can be efficiently used as a whole plant is required.

The present disclosure has been made in view of the above, and an object of the present disclosure is to provide a plant and a plant control method in which water can be efficiently used as a whole plant.

### Solution to Problem

A plant according to the present disclosure includes: a gas turbine; a heat recovery steam generator that exchanges heat with an exhaust gas from the gas turbine to generate steam; a steam turbine that is driven by the steam generated in the heat recovery steam generator; a carbon dioxide recovery unit that recovers, by using an absorption liquid, carbon dioxide contained in the exhaust gas discharged from the heat recovery steam generator; a steam supply system that supplies the steam generated in the heat recovery steam generator to the steam turbine and the carbon dioxide recovery unit; a condenser that generates water from the steam discharged from the steam turbine; a condensate system that is provided downstream of the condenser and that supplies the water generated in the condenser to the heat recovery steam generator; and a first return system that supplies water generated by heat exchange between the absorption liquid and the steam in the carbon dioxide recovery unit to the condenser or a condensate tank that receives and stores the water from the condenser.

A plant control method according to the present disclosure is a plant control method for controlling a plant further including a second return system that supplies water generated by heat exchange between the absorption liquid and the steam in the carbon dioxide recovery unit to the condensate system, in the plant, the plant control method including: supplying, in a case where an abnormality in the steam supply system or the condensate system is not detected, the water from the carbon dioxide recovery unit to the condensate system via the second return system; and supplying, in a case where the abnormality in the steam supply system or the condensate system is detected, the water from the carbon dioxide recovery unit to the condenser or the condensate tank via the first return system.

### Advantageous Effects of Invention

According to the present disclosure, it is possible to efficiently use water as a whole plant.

### Brief Description of Drawings

FIG. 1 is a schematic diagram showing an example of a plant according to the present embodiment.
FIG. 2 is a functional block diagram showing an example of a control system of a valve control unit.
FIG. 3 is a flowchart showing an example of a plant control method according to the present embodiment.
FIG. 4 is a schematic diagram showing another example of the plant according to the present embodiment.
FIG. 5 is a schematic diagram showing another example of the plant according to the present embodiment.
FIG. 6 is a schematic diagram showing another example of the plant according to the present embodiment.

### Description of Embodiments

Hereinafter, embodiments of a plant and a plant control method according to the present disclosure will be described with reference to the drawings. The present invention is not limited to the embodiment. Further, components of the following embodiments include components that can be easily substituted by those skilled in the art or components that are approximately the same as the components of the following embodiments.

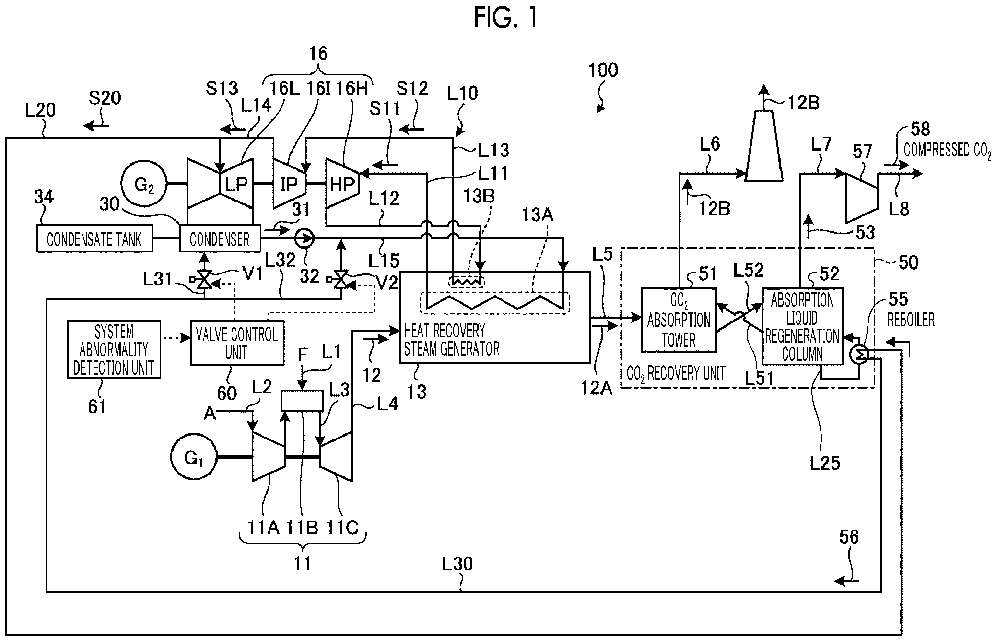

FIG. 1 is a schematic diagram of a plant 100 according to the present embodiment. In the present embodiment, the plant 100 will be described as a power generation plant, but can be used for various applications in which fuel is burned to extract energy.

As shown in FIG. 1, the plant 100 according to the present embodiment includes a gas turbine 11, a heat recovery steam generator 13 that generates steam S10 by exchanging heat energy of a combustion exhaust gas 12 from the gas turbine 11 in heat exchangers 13A and 13B, a steam turbine 16 driven by the steam S10 (S11, S12, and S13) generated by the heat recovery steam generator 13, a steam supply line (steam supply system) L10 that supplies the steam generated by the heat recovery steam generator 13 to the steam turbine 16, a condenser 30 that generates water from the steam discharged from the steam turbine 16, and a condensate line (condensate system) L15 that is provided downstream of the condenser 30 and supplies a condensate 31 generated by the condenser 30 to the heat recovery steam generator 13. The plant 100 constitutes a gas turbine combined cycle (GTCC) in which power generation is performed not only in the gas turbine 11 but also in the steam turbine 16 by using the exhaust heat in the heat recovery steam generator 13. The steam turbine 16 includes a high-pressure steam turbine 16H, a medium-pressure steam turbine 16I, and a low-pressure steam turbine 16L.

The gas turbine 11 includes an air compressor 11A, a combustor 11B, and a turbine section 11C. In the air compressor 11A, rotor blades and stator vanes are alternately disposed in multiple stages, and air A introduced from the outside is compressed to introduce compressed air at a high temperature and a high pressure to a combustor 11B side. The combustor 11B injects fuel F into the high-temperature and high-pressure compressed air introduced from the air compressor 11A to combust the fuel F and generate a high-temperature combustion gas. In the turbine section 11C, rotor blades and stator vanes are alternately disposed in multiple stages, and the combustion gas generated in the combustor 11B passes through the turbine section 11C. In the turbine section 11C, the rotor blades are rotated by the energy of the combustion gas in a case where the combustion gas passes through the turbine section 11C. In addition, the turbine section 11C and the air compressor 11A are connected to each other by a rotary shaft. The high-temperature and high-pressure combustion gas is supplied from the combustor 11B to the turbine section 11C, and the heat energy of the high-temperature and high-pressure combustion gas is converted into rotational energy in the turbine section 11C. The air compressor 11A disposed coaxially is driven by the rotational energy. In addition, in the gas turbine 11, a gas turbine generator G1 is connected to the rotary shaft, and the gas turbine generator G1 is driven by the rotational energy to generate power. A combustion exhaust gas 12 obtained by driving the turbine section 11C is discharged to a heat recovery steam generator 13. The heat recovery steam generator 13 recovers the heat energy of the combustion exhaust gas 12.

The heat recovery steam generator 13 includes a heat exchanger 13A and a heat exchanger 13B. A steam supply line L10 includes a first steam line L11, a second steam line L12, a third steam line L13, and a fourth steam line L14. The first steam line L11 connects the heat exchanger 13A of the heat recovery steam generator 13 and a high-pressure steam turbine 16H. The second steam line L12 connects the high-pressure steam turbine 16H and the heat exchanger 13B. The third steam line L13 connects the heat exchanger 13B and a medium-pressure steam turbine 16I. The fourth steam line L14 connects the medium-pressure steam turbine 16I and a low-pressure steam turbine 16L, and introduces steam S13 into the low-pressure steam turbine 16L. A condensate line L15 connects the condenser 30 and the heat exchanger 13A, and introduces a condensate 31 into the heat exchanger 13A. A condensate pump 32 is interposed in the condensate line L15, and pressurizes the condensate 31 generated by the condenser 30. A condensate tank 34 is connected to the condenser 30. The condensate tank 34 receives and stores water from the condenser 30. The condensate tank 34 can reduce the storage amount by discharging the stored water to the outside.

The heat exchanger 13A performs heat exchange between the condensate 31 supplied from the condenser 30 and the combustion exhaust gas 12. The condensate 31 becomes steam (for example, 550°C) S11 by performing heat exchange with the combustion exhaust gas 12. The steam S11 is sent to the high-pressure steam turbine 16H via the first steam line L11, and drives the high-pressure steam turbine 16H.

The heat exchanger 13B performs heat exchange between the exhaust steam that has passed through the high-pressure steam turbine 16H and the combustion exhaust gas 12. The exhaust steam is introduced into the heat exchanger 13B of the heat recovery steam generator 13 via the second steam line L12, and becomes steam (for example, 550°C) S12 by performing heat exchange with the combustion exhaust gas 12. The steam S12 is sent to the medium-pressure steam turbine 16I via the third steam line L13, and drives the medium-pressure steam turbine 16I. The steam (for example, 270°C) S13 that has passed through the medium-pressure steam turbine 16I is supplied to the low-pressure steam turbine 16L, and drives the low-pressure steam turbine 16L. The exhaust steam that has passed through the low-pressure steam turbine 16L is returned to the condensate (for example, 40°C to 50°C) 31 by the condenser 30.

The plant 100 includes a fuel introduction line L1, an air introduction line L2, a combustion gas line L3, and a combustion exhaust gas discharge line L4. The fuel introduction line L1 introduces the fuel F into the combustor 11B. The air introduction line L2 introduces the air A into the air compressor 11A. The combustion gas line L3 introduces the combustion gas into the turbine section 11C. The combustion exhaust gas discharge line L4 discharges the combustion exhaust gas 12 from the turbine section 11C, and introduces the combustion exhaust gas 12 into the heat recovery steam generator 13.

In addition, the plant 100 according to the present embodiment includes a carbon dioxide recovery unit 50 that recovers carbon dioxide contained in the combustion exhaust gas 12 discharged from the heat recovery steam generator 13 by using an absorption liquid, a steam supply line (steam supply system) L20 that supplies the steam generated in the heat recovery steam generator 13 to the carbon dioxide recovery unit 50, a first return line (first return system) L31 that supplies condensed water 56 generated by heat exchange between the absorption liquid and the steam in the carbon dioxide recovery unit 50 to the condenser 30, and a second return line (second return system) L32 that supplies the condensed water 56 generated by heat exchange between the absorption liquid and the steam in the carbon dioxide recovery unit 50 to the condensate system L15.

The carbon dioxide recovery unit 50 includes a carbon dioxide absorption tower 51, an absorption liquid regeneration column 52, and a reboiler 55. The carbon dioxide absorption tower 51 absorbs the carbon dioxide in a combustion exhaust gas 12A discharged from the heat recovery steam generator 13 by using, for example, an absorption liquid such as an amine absorption liquid. The absorption liquid regeneration column 52 desorbs the carbon dioxide from the absorption liquid that has absorbed the carbon dioxide in the carbon dioxide absorption tower 51 by using the reboiler 55. The reboiler 55 heats the absorption liquid by using the steam generated in the heat recovery steam generator 13 in order to desorb the carbon dioxide from the absorption liquid. The reboiler 55 is installed in the absorption liquid regeneration column 52. The carbon dioxide recovery unit 50 heats the absorption liquid that has absorbed the carbon dioxide in the absorption liquid regeneration column 52, thereby desorbing the carbon dioxide from the absorption liquid, recovering high-purity carbon dioxide, and regenerating the absorption liquid.

The absorption liquid that has passed through the carbon dioxide absorption tower 51 and has absorbed the carbon dioxide is referred to as a rich solution. The absorption liquid that has passed through the absorption liquid regeneration column 52 and has been separated from the carbon dioxide is referred to as a lean solution. The lean solution is sent to the carbon dioxide absorption tower 51 by a lean solution line L51, and the carbon dioxide absorption tower 51 absorbs the carbon dioxide again to become a rich solution. The rich solution is sent to the absorption liquid regeneration column 52 by a rich solution line L52. The carbon dioxide recovery unit 50 circulates and reuses the absorption liquid in a closed system. The absorption liquid is not limited to the amine absorption liquid, and may be any absorption liquid as long as it has a property of absorbing and releasing carbon dioxide. The present invention is not limited thereto.

The absorption liquid regeneration column 52 is connected to a reboiler line L25 including a reboiler 55 that circulates a part of the lean solution, on a side near the bottom portion. A part of the lean solution regenerated in the absorption liquid regeneration column 52 is heated by being heat-exchanged with the steam in the reboiler 55 interposed in the reboiler line L25, and is circulated to the absorption liquid regeneration column 52.

The carbon dioxide recovery unit 50 includes a first gas discharge line L6, a second gas discharge line L7, and a discharge line L8. The first gas discharge line L6 discharges a treatment gas 12B from which the carbon dioxide has been removed from the top portion of the carbon dioxide absorption tower 51 to the outside. The second gas discharge line L7 introduces carbon dioxide 53 discharged from the top portion of the absorption liquid regeneration column 52 into a carbon dioxide compressor 57. The discharge line L8 discharges compressed carbon dioxide 58 compressed by the carbon dioxide compressor 57.

The steam supply line L20 connects the fourth steam line L14 that supplies the steam S13 from the exhaust of the medium-pressure steam turbine 16I to the low-pressure steam turbine 16L, and the reboiler 55. The steam supply line L20 extracts a part of the steam S13 of the fourth steam line L14 and supplies the extracted steam S13 to the reboiler 55 as steam S20.

The steam S20 supplied from the steam supply line L20 to the reboiler 55 is at a temperature (for example, 130°C to 140°C) required for the regeneration of the absorption liquid in the reboiler 55. In the reboiler 55, the steam S20 is condensed by being heat-exchanged with the absorption liquid to become the condensed water 56. The condensed water 56 generated in the reboiler 55 is in a state in which the temperature is lowered to about 100°C.

The condensate line L30 is connected to the reboiler 55. The condensate line L30 returns the condensed water 56 generated in the reboiler 55 to the GTCC side. The condensate line L30 branches into a first return line L31 and a second return line L32.

The first return line L31 is connected to the condenser 30. The first return line L31 supplies the condensed water 56 from the reboiler 55 and the condensate line L30 to the condenser 30. The first control valve V1 is provided in the first return line L31. For example, an electromagnetic valve or the like is used as the first control valve V1, and the first return line L31 is opened and closed. In a state in which the first control valve V1 is opened, the condensed water 56 from the condensate line L30 is supplied to the condenser 30 via the first return line L31. On the other hand, in a state in which the first control valve V1 is closed, the condensed water 56 from the condensate line L30 is not supplied to the condenser 30. The first control valve V1 is controlled to be opened and closed by the control of a valve control unit 60.

The second return line L32 is connected to a downstream portion of the condensate line L15 with respect to the condensate pump 32. The second return line L32 supplies the condensed water 56 from the reboiler 55 and the condensate line L30 to downstream of the condensate pump 32 of the condensate line L15 (hereinafter, referred to as a pump downstream side). The second control valve V2 is provided in the second return line L32. For example, an electromagnetic valve or the like is used as the second control valve V2, and the second return line L32 is opened and closed. In a state in which the second control valve V2 is opened, the condensed water 56 from the condensate line L30 is supplied to the pump downstream side of the condensate line L15 via the second return line L32. On the other hand, in a state in which the second control valve V2 is closed, the condensed water 56 from the condensate line L30 is not supplied to the pump downstream side of the condensate line L15.

The valve control unit 60 controls the opening and closing operations of the first control valve V1 and the second control valve V2. In the present embodiment, the plant 100 is provided with a system abnormality detection unit 61 that detects an abnormality in at least one of the steam supply lines L10 and L20 and the condensate line L15. The valve control unit 60 may control the opening and closing operations of the first control valve V1 and the second control valve V2 based on, for example, a detection result of the system abnormality detection unit 61.

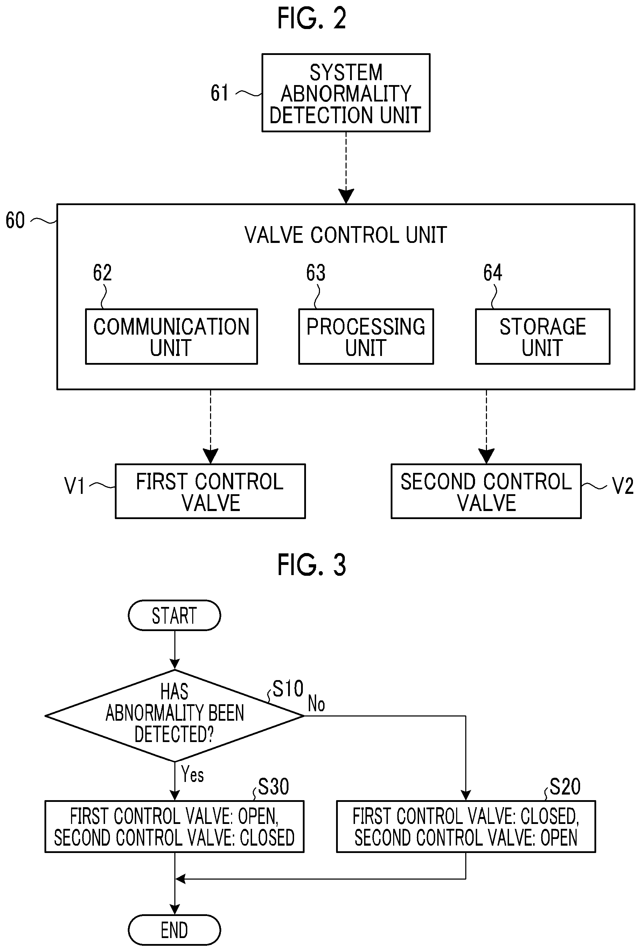

FIG. 2 is a functional block diagram showing an example of a control system of the valve control unit 60. As shown in FIG. 2, the valve control unit 60 includes a communication unit 62, a processing unit 63, and a storage unit 64.

The communication unit 62 performs wired or wireless communication with an external device. The communication unit 62 includes an interface such as a network interface card.

The processing unit 63 performs various types of information processing. The processing unit 63 includes a processor such as a central processing unit (CPU), and a memory such as a read only memory (ROM) or a random access memory (RAM).

The processing unit 63 may control the opening and closing operations of the first control valve V1 and the second control valve V2 based on the detection result of the system abnormality detection unit 61. The processing of the processing unit 63 will be specifically described later.

The storage unit 64 stores, for example, various programs, data, and the like for controlling the opening and closing operations of the first control valve V1 and the second control valve V2 in the processing unit 63. The storage unit 64 includes a storage such as a hard disk drive (HDD) or a solid state drive (SSD).

In the control unit 60, the processor reads out various programs in the processing unit 63 and loads the programs in the memory, thereby executing information processing corresponding to the functions of the respective units. Examples of the various programs include a program received by the communication unit 62, a program stored in the storage unit 64, and a program recorded on an external recording medium. The control unit 60 functions as an information processing device (computer) that executes various types of information processing. Another information processing device different from the control unit 60 may execute various programs, or the control unit 60 and another information processing device may cooperate to execute various programs.

An example of the control of the valve control unit 60 will be specifically described. FIG. 3 is a flowchart showing an example of a plant control method according to the present embodiment. FIG. 3 shows an example of the control of the valve control unit 60 as the control of the plant. As shown in FIG. 3, the processing unit 63 determines whether or not the system abnormality detection unit 61 has detected an abnormality (step S10). In a case where it is determined that the system abnormality detection unit 61 has not detected an abnormality (No in step S10), the processing unit 63 performs control to close the first control valve V1 and to open the second control valve V2 (step S20). In addition, in a case where the system abnormality detection unit 61 has detected an abnormality (Yes in step S10), the processing unit 63 performs control to open the first control valve V1 and to close the second control valve V2 (step S30).

With this control, in a case where an abnormality has not occurred in the steam supply lines L10 and L20 and the condensate line L15, the first control valve V1 is closed and the second control valve V2 is opened. Therefore, the condensed water 56 from the reboiler 55 is supplied from the condensate line L30 to the pump downstream side of the condensate line L15 via the second return line L32. In this case, in a state where the normal operation is performed on the GTCC side, the condensed water 56 can be prevented from being supplied to the condenser 30. Therefore, the deterioration in the degree of vacuum of the condenser 30 can be avoided.

In addition, in a case where an abnormality has occurred in the steam supply lines L10 and L20 and the condensate line L15, the steam supply lines L10 and L20 and the condensate line L15 are closed on the GTCC side. In such a case, the first control valve V1 is opened and the second control valve V2 is closed. Therefore, the condensed water 56 from the reboiler 55 is supplied from the condensate line L30 to the condenser 30 via the first return line L31. Therefore, the supply destination of the condensed water 56 can be secured, and thus water can be efficiently used as the entire plant.

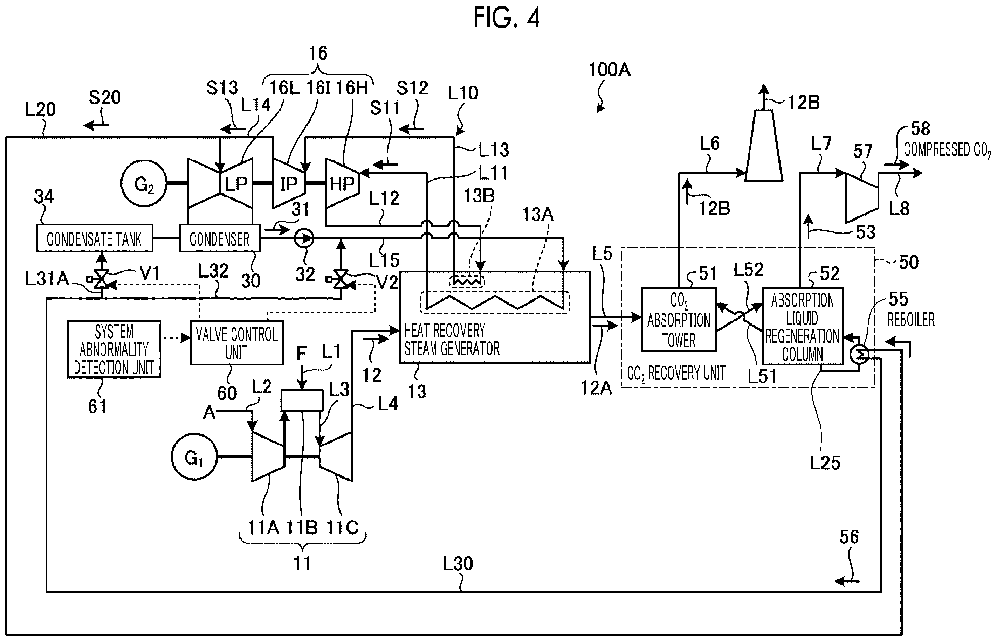

FIG. 4 is a schematic diagram showing another example of the plant according to the present embodiment. A plant 100A shown in FIG. 4 is different from the above-described plant 100 in that a first return line L31A is connected from the condensate line L30 to the condensate tank 34. Other configurations are the same as those of the above-described plant 100.

In a case where the first control valve V1 is opened, the first return line L31A supplies the condensed water 56 from the reboiler 55 and the condensate line L30 to the condensate tank 34. In this way, a configuration may be adopted in which the condensed water 56 from the reboiler 55 and the condensate line L30 can be supplied to the condensate tank 34. Accordingly, the supply destination of the condensed water 56 can be secured, and thus water can be efficiently used as the entire plant. In a case where the first control valve V1 is closed, the first return line L31A does not supply the condensed water 56 from the reboiler 55 and the condensate line L30 to the condensate tank 34.

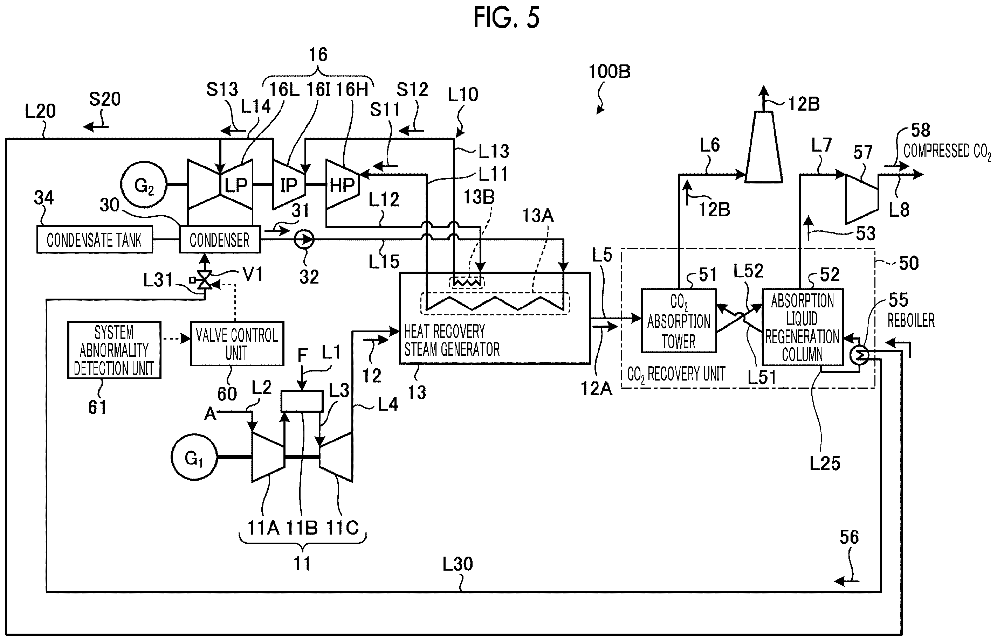

FIG. 5 is a schematic diagram showing another example of the plant according to the present embodiment. A plant 100B shown in FIG. 5 is different from the above-described plant 100 in that a second return line L32 and a second control valve V2 are not provided. In addition, the valve control unit 60 controls the first control valve V1. Other configurations are the same as those of the above-described plant 100. A configuration may be adopted in which the first return line L31 is connected from the condensate line L30 to the condensate tank 34.

In a case where the first control valve V1 is opened by the valve control unit 60, the first return line L31 supplies the condensed water 56 from the reboiler 55 and the condensate line L30 to the condenser 30. In this way, the condensed water 56 generated in the reboiler 55 is not discharged to the outside of the system, but is supplied from the condensate line L30 to the condenser 30 by the first return line L31 and is reused as the condensate. Accordingly, water can be efficiently used in the entire plant 100B. The valve control unit 60 may control the opening/closing operation of the first control valve V1 based on the detection result of the system abnormality detection unit 61. In addition, the valve control unit 60 may independently control the opening/closing operation of the first control valve V1 regardless of the detection result of the system abnormality detection unit 61. In this case, the system abnormality detection unit 61 may not be provided.

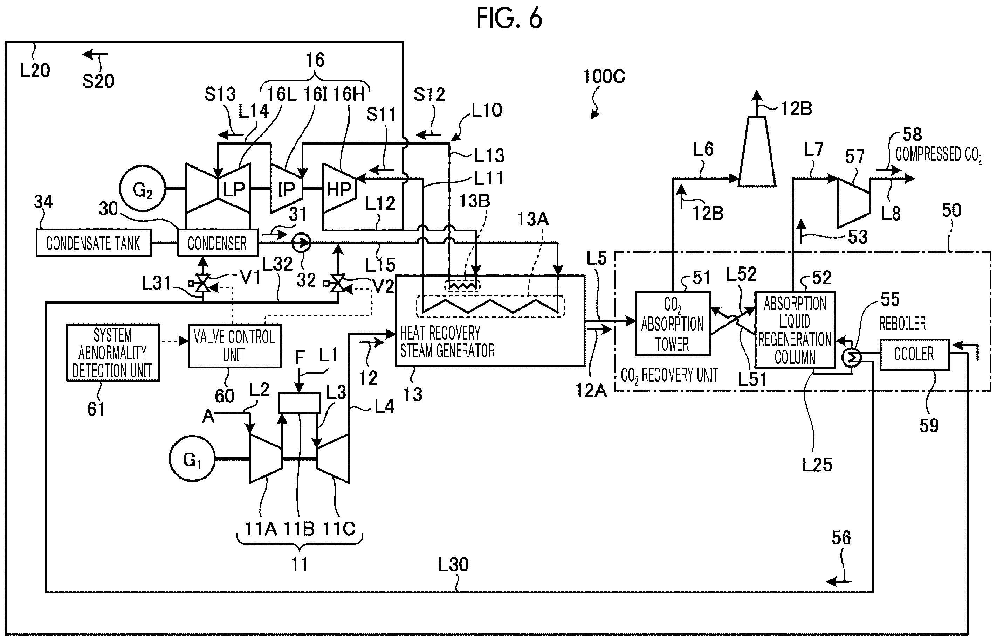

FIG. 6 is a schematic diagram showing another example of the plant according to the present embodiment. A plant 100C shown in FIG. 6 is different from the above-described plant 100 in that the steam supply line L20 described above connects the second steam line L12 that supplies the exhaust steam passing through the high-pressure steam turbine 16H to the heat recovery steam generator 13 and the reboiler 55. In addition, the plant 100C is different from the above-described plant 100 in that a cooler 59 is disposed upstream of the reboiler 55 in the steam supply line L20. Other configurations are the same as those of the above-described plant 100.

In the plant 100C, a part of the exhaust steam passing through the high-pressure steam turbine 16H is extracted from the second steam line L12 as the steam S20 to the steam supply line L20. The exhaust steam passing through the high-pressure steam turbine 16H is reheated by the heat recovery steam generator 13 and then supplied to the medium-pressure turbine 16I to be reused. Therefore, even in a case where a part of the exhaust steam of the high-pressure steam turbine 16H flowing through the second steam line L12 is extracted to the steam supply line L20, the efficiency of the steam turbine 16 is not affected.

The steam S20 extracted to the steam supply line L20 is supplied from the steam supply line L20 to the cooler 59, is cooled by the cooler 59, and is supplied to the reboiler 55. In FIG. 6, the cooler 59 is shown as an example of a configuration provided as a part of the carbon dioxide recovery unit 50, but the present invention is not limited to this configuration, and the cooler 59 may be provided as a separate configuration from the carbon dioxide recovery unit 50. The steam S20 is cooled by the cooler 59, and thus the steam temperature is appropriately set to a temperature for efficiently operating the reboiler 55, and the steam S20 is supplied to the reboiler 55. Therefore, the operation efficiency of the reboiler 55 can be improved.

In the plant 100C shown in FIG. 6, for the plant 100, the steam supply line L20 connects the second steam line L12 and the reboiler 55, and the cooler 59 is disposed upstream of the reboiler 55 in the steam supply line L20, but the present invention is not limited thereto. For example, the steam supply line L20 may connect the second steam line L12 and the reboiler 55, and the cooler 59 may be disposed upstream of the reboiler 55 in the steam supply line L20, with respect to the plant 100A shown in FIG. 4 and the plant 100B shown in FIG. 5. In addition, in any of the above-described configurations, the cooler 59 may not be provided.

As described above, according to a first aspect of the present disclosure, there is provided the plant 100, the plant 100A, or the plant 100B including the gas turbine 11, the heat recovery steam generator 13 that exchanges heat with an exhaust gas from the gas turbine 11 to generate steam, the steam turbine 16 that is driven by the steam generated in the heat recovery steam generator 13, the carbon dioxide recovery unit 50 that recovers, by using an absorption liquid, the carbon dioxide contained in the exhaust gas discharged from the heat recovery steam generator 13, the steam supply lines L10 and L20 that supply the steam generated in the heat recovery steam generator 13 to the steam turbine 16 and the carbon dioxide recovery unit 50, the condenser 30 that generates the condensate 31 from the steam discharged from the steam turbine 16, the condensate line L15 that is provided downstream of the condenser 30 and that supplies the condensate 31 generated in the condenser 30 to the heat recovery steam generator 13, and the first return line L31 that supplies the condensed water 56 generated by the heat exchange between the absorption liquid and the steam in the carbon dioxide recovery unit 50 to the condenser 30 or the condensate tank 34 that receives and stores the water from the condenser 30.

According to this configuration, the condensed water 56 generated by the reboiler 55 is not discharged as wastewater, but is supplied from the condensate line L30 to the condenser 30 by the first return line L31 and is reused as the condensate. Accordingly, the water can be efficiently used in the entire plant 100, plant 100A, or plant 100B.

According to a second aspect of the present disclosure, in the first aspect, a second return line L32 that supplies the condensed water 56 generated by the heat exchange between the absorption liquid and the steam in the carbon dioxide recovery unit 50 to the condensate line L15 is further provided.

According to this configuration, the first return line L31 or L31A that returns the condensed water 56 from the carbon dioxide recovery unit 50 to the condenser 30 or the condensate tank 34, and the second return line L32 that returns the condensed water 56 to the condensate line L15 are provided. Therefore, for example, in a state where the normal operation is performed on the GTCC side, the condensed water 56 is returned from the second return line L32 to the condensate line L15, so that the condensed water 56 can be prevented from being supplied to the condenser 30, and the deterioration in the degree of vacuum of the condenser 30 can be avoided. In addition, for example, in a case where the steam supply lines L10 and L20 and the condensate line L15 are closed on the GTCC side, the condensed water 56 is returned from the first return line L31 to the condenser 30, so that the supply destination of the condensed water 56 can be secured.

According to a third aspect of the present disclosure, in the second aspect, the condensate line L15 includes a condensate pump 32 that pressurizes the condensate 31 generated in the condenser 30, and the second return line L32 supplies the condensed water 56 from the carbon dioxide recovery unit 50 to a portion of the condensate line L15 downstream of the condensate pump 32.

According to this configuration, the condensed water 56 is supplied to the downstream portion pressurized by the condensate pump 32 in the condensate line L15, so that the load on the condensate pump 32 can be reduced.

According to a fourth aspect of the present disclosure, in the second aspect or the third aspect, the first return line L31 supplies the condensed water 56 from the carbon dioxide recovery unit 50 to the condenser 30 and the condensate tank 34 that receives and stores the water from the condenser 30 is further provided.

According to this configuration, the condensed water 56 supplied to the condenser 30 can be stored in the condensate tank 34. By using the condensate tank 34 as a buffer in this way, the capacity of the water that can be stored in the condenser 30 can be secured.

According to a fifth aspect of the present disclosure, in any one of the second to fourth aspects, there are further provided a system abnormality detection unit 61 that detects an abnormality in at least one of the steam supply lines L10 and L20 and the condensate line L15, a first control valve V1 provided in the first return line L31, a second control valve V2 provided in the second return line L32, and a valve control unit 60 that controls the first control valve V1 and the second control valve V2 based on a detection result of the system abnormality detection unit 61, in which the valve control unit 60 performs, in a case where the abnormality is not detected, control of closing the first control valve V1 and opening the second control valve V2, and in a case where the abnormality is detected, control of opening the first control valve V1 and closing the second control valve V2.

According to this configuration, the first control valve V1 and the second control valve V2 are controlled such that the condensed water 56 is returned from the second return line L32 to the condensate line L15 in a case where the abnormality in the steam supply lines L10 and L20 and the condensate line L15 is not detected, and the condensed water 56 is returned from the first return line L31 to the condenser 30 in a case where the abnormality in at least one of the steam supply lines L10 and L20 and the condensate line L15 is detected. Therefore, the return destination of the condensed water 56 can be appropriately switched.

According to a sixth aspect of the present disclosure, in any one of the second to fifth aspects, the steam turbine 16 includes a high-pressure steam turbine, a medium-pressure steam turbine, and a low-pressure steam turbine, and the steam supply lines L10 and L20 extract a portion of the steam from a system supplying the steam from the medium-pressure steam turbine to the low-pressure steam turbine and supply the extracted steam to the carbon dioxide recovery unit 50.

According to this configuration, the steam containing appropriate thermal energy for performing heat exchange with the absorption liquid can be supplied to the carbon dioxide recovery unit 50.

According to a seventh aspect of the present disclosure, in any one of the first to sixth aspects, the steam turbine 16 includes a high-pressure steam turbine 16H, the carbon dioxide recovery unit 50 includes a reboiler 55, and the steam supply lines L10 and L20 extract a portion of the steam from a system supplying the steam from the high-pressure steam turbine 16H to the heat recovery steam generator 13 and supply the extracted steam to the reboiler 55 of the carbon dioxide recovery unit 50.

In this configuration, the exhaust steam that has passed through the high-pressure steam turbine 16H is reheated in the heat recovery steam generator 13 and then reused. Therefore, even in a case where a portion of the exhaust steam of the high-pressure steam turbine 16H is extracted and supplied to the reboiler 55, the efficiency of the steam turbine 16 is not affected. Therefore, the steam generated in the heat recovery steam generator 13 can be supplied to the carbon dioxide recovery unit 50 without affecting the efficiency of the steam turbine 16.

According to an eighth aspect of the present disclosure, in the seventh aspect, in the steam supply line L20, a cooler 59 is disposed upstream of the reboiler 55.

According to this configuration, since the cooler 59 is disposed upstream of the reboiler 55 in the steam supply line L20, the steam temperature for efficiently operating the reboiler 55 can be appropriately set.

According to a ninth aspect of the present disclosure, there is provided a plant control method for controlling the plant 100, 100A according to any one of the second to sixth aspects, the plant control method including: supplying, in a case where an abnormality in the steam supply lines L10 and L20 or the condensate line L15 is not detected, the water from the carbon dioxide recovery unit 50 to the condensate line L15 via the second return line L32; and supplying, in a case where the abnormality in the steam supply lines L10 and L20 or the condensate line L15 is detected, the water from the carbon dioxide recovery unit 50 to the condenser 30 or the condensate tank 34 via the first return line L31.

The technical scope of the present invention is not limited to the embodiment described above, and can be appropriately changed without departing from the gist of the present invention. For example, in the above-described embodiment, the configuration in which the steam supply line L20 is connected to the reboiler 55 from the fourth steam line L14 has been described as an example, but the present invention is not limited to this configuration. The steam supply line L20 may be configured to be connected to the reboiler 55 from another portion of the steam supply line L10.

### Reference Signs List

11: gas turbine
11A: air compressor
11B: combustor
11C: turbine section
12, 12A: combustion exhaust gas
12B: treatment gas
13: heat recovery steam generator
13A, 13B: heat exchanger
16: steam turbine
16H: high-pressure steam turbine
16I: medium-pressure steam turbine
16L: low-pressure steam turbine
30: condenser
31: condensate
32: condensate pump
34: condensate tank
50: carbon dioxide recovery unit
51: carbon dioxide absorption tower
52: absorption liquid regeneration column
53: carbon dioxide
55: reboiler
56: condensed water
57: carbon dioxide compressor
58: compressed carbon dioxide
60: valve control unit, control unit
61: detection unit
62: communication unit
63: processing unit
64: storage unit
100, 100A, 100B, 100C: plant
A: air
F: fuel
G1: gas turbine generator
G2: steam turbine generator
L1: fuel introduction line
L2: air introduction line
L3: combustion gas line
L4, L5: combustion exhaust gas discharge line
L6: first gas discharge line
L7: second gas discharge line
L8: discharge line
L11: first steam line
L12: second steam line
L13: third steam line
L10, L20: steam supply line
L14: fourth steam line
L15: condensate line, condensate system
L25: reboiler line
L30: condensate line
L31, L31A: first return line
L32: second return line
L51: lean solution line
L52: rich solution line
S10: steam
V1: first control valve
V2: second control valve

## Claims

1. A plant comprising:
a gas turbine;
a heat recovery steam generator that exchanges heat with an exhaust gas from the gas turbine to generate steam;
a steam turbine that is driven by the steam generated in the heat recovery steam generator;
a carbon dioxide recovery unit that recovers, by using an absorption liquid, carbon dioxide contained in the exhaust gas discharged from the heat recovery steam generator;
a steam supply system that supplies the steam generated in the heat recovery steam generator to the steam turbine and the carbon dioxide recovery unit;
a condenser that generates water from the steam discharged from the steam turbine;
a condensate system that is provided downstream of the condenser and that supplies the water generated in the condenser to the heat recovery steam generator; and
a first return system that supplies water generated by heat exchange between the absorption liquid and the steam in the carbon dioxide recovery unit to the condenser or a condensate tank that receives and stores the water from the condenser.

2. The plant according to Claim 1, further comprising:
a second return system that supplies the water generated by the heat exchange between the absorption liquid and the steam in the carbon dioxide recovery unit to the condensate system.

3. The plant according to Claim 2,
wherein the condensate system includes a condensate pump that pressurizes the water generated in the condenser, and
the second return system supplies the water from the carbon dioxide recovery unit to a portion of the condensate system downstream of the condensate pump.

4. The plant according to Claim 2,
wherein the first return system supplies the water from the carbon dioxide recovery unit to the condenser, and
the plant further comprises a condensate tank that receives and stores the water from the condenser.

5. The plant according to Claim 2, further comprising:
a system abnormality detection unit that detects an abnormality in at least one of the steam supply system and the condensate system;
a first control valve provided in the first return system;
a second control valve provided in the second return system; and
a valve control unit that controls the first control valve and the second control valve based on a detection result of the system abnormality detection unit,
wherein the valve control unit performs
in a case where the abnormality is not detected, control of closing the first control valve and opening the second control valve, and
in a case where the abnormality is detected, control of opening the first control valve and closing the second control valve.

6. The plant according to Claim 2,
wherein the steam turbine includes a high-pressure steam turbine, a medium-pressure steam turbine, and a low-pressure steam turbine, and
the steam supply system extracts a portion of the steam from a system supplying the steam from the medium-pressure steam turbine to the low-pressure steam turbine and supplies the extracted steam to the carbon dioxide recovery unit.

7. The plant according to Claim 1,
wherein the steam turbine includes a high-pressure steam turbine,
the carbon dioxide recovery unit includes a reboiler, and
the steam supply system extracts a portion of the steam from a system supplying the steam from the high-pressure steam turbine to the heat recovery steam generator and supplies the extracted steam to the reboiler of the carbon dioxide recovery unit.

8. The plant according to Claim 7,
wherein in the steam supply system, a cooler is disposed upstream of the reboiler.

9. A plant control method for controlling the plant according to Claim 2, the plant control method comprising:
supplying, in a case where an abnormality in the steam supply system or the condensate system is not detected, the water from the carbon dioxide recovery unit to the condensate system via the second return system; and
supplying, in a case where the abnormality in the steam supply system or the condensate system is detected, the water from the carbon dioxide recovery unit to the condenser or the condensate tank via the first return system.
